# EUROPÄISCHE PATENTSCHRIFT

(11) **EP 0 854 368 B1**
(45) Veröffentlichungstag und Bekanntmachung des Hinweises auf die Patenterteilung: **16.11.2005**
(21) Anmeldenummer: 97121367.3
(22) Anmeldetag: 04.12.1997
(51) Int. Cl.: G01S 17/32

(54) **Lichttaster mit Lichtlaufzeit-Auswertung**
Light sensor with signal evaluation based on time of flight of light
Senseur luminex employant une évalution du temps de vol de lumière

(30) Priorität: 20.01.1997 DE 19701803
(43) Veröffentlichungstag der Anmeldung: 22.07.1998
(73) Patentinhaber: SICK AG, 79183 Waldkirch, Breisgau (DE)
(72) Erfinder: Blümcke, Thomas, 79261 Gutach (DE); Breisacher, Hans-Joachim, 79353 Bahlingen (DE)
(74) Vertreter: Finsterwald, Martin

(56) Entgegenhaltungen:
- EP-A- 0 449 596
- DE-A- 4 217 423
- DE-A- 19 517 001
- FR-A- 2 258 639
- TAMIYA N ET AL: "Optical spread spectrum radar for lateral detection in vehicles" 1996 IEEE 4TH INTERNATIONAL SYMPOSIUM ON SPREAD SPECTRUM TECHNIQUES AND APPLICATIONS PROCEEDINGS. TECHNICAL PROGRAM. (CAT. NO.96TH8210), PROCEEDINGS OF ISSSTA'95 INTERNATIONAL SYMPOSIUM ON SPREAD SPECTRUM TECHNIQUES AND APPLICATIONS, MAINZ, GERMANY, , Seiten 195-198 vol.1, XP002107877 ISBN 0-7803-3567-8, 1996, New York, NY, USA, IEEE, USA

## Beschreibung

Die Erfindung betrifft einen auf dem Prinzip der Lichtlaufzeit-Auswertung basierenden Lichttaster mit einem Lichtsender zur Aussendung eines Lichtsignals in einem zu überwachenden Bereich und einem Lichtempfänger zum Empfangen eines von einem im Überwachungsbereich vorhandenen Objekt reflektierten Lichtsignals, bei dem durch Ermittlung der zwischen Lichtaussendung und Lichtempfang verstreichenden Zeit auf dem Abstand zwischen Lichttaster und Objekt geschlossen wird.

Ein derartiger Lichttaster ist aus der Veröffentlichung TAMIYA N ET AL:"Optical spread spectrum radar for lateral detection in vehicles" 1996 IEEE 4TH INTERNATIONAL SYMPOSIUM ON SPREAD SPECTRUM TECHNIQUES AND APPLICATIONS PROCEEDINGS. TECHNICAL PROGRAM. (CAT. NO.96TH8210), PROCEEDINGS OF ISSSTA'95 INTERNATIONAL SYMPOSIUM ON SPREAD SPECTRUM TECHNIQUES AND.APPLICATIONS, MAINZ, GERMANY, Seiten 195-198 vol. 1, XP002107877 ISBN 0-7803-3567-8, 1996, New York, NY, USA, IEEE, USA bekannt.

Neben den vorstehend genannten, auf dem Prinzip der Lichtlaufzeit-Auswertung basierenden Lichttastern existieren auch auf dem Prinzip der Triangulation basierende Lichttaster, bei denen Lichtsender und Lichtempfänger nebeneinander angeordnet sein müssen, um so den Winkel zwischen einem ausgesendeten und einem empfangenen Lichtstrahl bestimmen und aus diesem Winkel den Abstand zwischen Lichttaster und Objekt ermitteln zu können. Diese Triangulationssysteme weisen den Nachteil auf, daß bei reflektierenden Objekten durch ein Verkippen derselben Verfälschungen des ermittelten Winkels erfolgen, was schließlich in der Bestimmung eines falschen Abstandes resultiert. Weiterhin ist von Nachteil, daß bei großen Detektionsweiten lediglich eine geringe Genauigkeit gegeben ist, was nur mit zu großen Bauformen des Lichttasters kompensiert werden kann, da Sende- und Empfangsoptik einen ausreichend großen Abstand voneinander aufweisen müssen. Dieser verhältnismäßig große Abstand zwischen Sende-und Empfangsoptik bedingt wiederum auf nachteilige Weise, daß sehr nahe am Lichttaster befindliche Objekte nicht detektiert werden können.

Aus vorstehend genannten Gründen ist deshalb grundsätzlich die Verwendung von auf dem Prinzip der Lichtlaufzeit-Auswertung basierenden Lichttastern von Vorteil, da diese die vorstehend beschriebenen Nachteile nicht aufweisen. Allerdings sind diese, auf dem Prinzip der Lichtlaufzeit-Auswertung basierenden Lichttaster mit einem relativ hohen technischen Aufwand verbunden, da zur Ermittlung der Lichtlaufzeit eine komplexe Signalverarbeitung nötig ist. Weiterhin weisen insbesondere solche Lichtlaufzeit-Taster, die die Lichtlaufzeit durch eine Korrelation zwischen dem Sende- bzw. einem Referenz- und dem Empfangssignal berechnen, einen geringen Eindeutigkeitsbereich auf, was ebenfalls von Nachteil ist.

Eine Aufgabe der Erfindung besteht darin, einen auf dem Prinzip der Lichtlaufzeit-Auswertung basierenden Lichttaster bereitzustellen, welcher mit geringem wirtschaftlichen Aufwand herstellbar ist und einen möglichst großen Eindeutigkeitsbereich besitzt.

Diese Aufgabe wird erfindungsgemäß gelöst durch einen Lichttaster gemäß Anspurch 1.

Im Unterschied zu den eingangs genannten, auf einem Korrelations-Prinzip basierenden Lichtlaufzeit-Tastern wird erfindungsgemäß eine Korrelationsfunktion zwischen dem empfangenen Lichtsignal und einem zweiten Signal gebildet, wobei das zweite Signal und das ausgesendete Lichtsignal entweder zur gleichen Zeit generiert werden oder zueinander einen bekannten Zeitversatz aufweisen. Das ausgesendete bzw. empfangene Lichtsignal hat dabei eine vom zweiten Signal unterschiedliche Signalform, was es ermöglicht, die Signalformen derart zu wählen, daß sich letztlich ein nicht linearer Verlauf der Korrelationsfunktion einstellt. Diese Nichtlinearität kann bei entsprechender Auswahl der verwendeten Signalformen derart gewählt werden, daß der Wert der Korrelationsfunktion außerhalb des jeweils interessanten Tastbereiches oberhalb bzw. unterhalb einer oberen bzw. unteren Schwelle liegt und sich innerhalb des interessanten Tastbereichs ein relativ steiler Verlauf der Korrelationsfunktion zwischen oberer und unterer Schwelle einstellt. Dieser steile Verlauf der Korrelationsfunktion innerhalb des interessanten Tastbereiches führt zu einer sehr hohen Genauigkeit des erfindungsgemäßen Lichttasters, insbesondere können beispielsweise Abstände von ungefähr 6 m mit einer Genauigkeit von 1 bis 2 cm bestimmt werden.

Da die Korrelationsfunktion außerhalb des interessanten Tastbereichs oberhalb bzw. unterhalb der oberen bzw. unteren Schwelle verläuft, besteht in diesen Bereichen auch kein Problem hinsichtlich der Eindeutigkeit des erfindungsgemäßen Lichttasters. Ein solches Eindeutigkeitsproblem könnte nur dann bestehen, wenn sich der Wert der Korrelationsfunktion außerhalb des interessanten Tastbereiches zwischen der unteren und oberen Schwelle befinden würde, was bei entsprechender Auswahl der beiden genannten Signalformen jedoch nicht der Fall ist.

Das erfindungsgemäß den Lichtsender beaufschlagende erste Signal sowie das zur Bildung der Korrelationsfunktion herangezogene zweite Signal weisen bevorzugt untereinander gleiche Periodenlängen auf.

Erfindungs gemäß werden die Signalformen des ersten und zweiten Signals derart gewählt, daß die zwischen beiden Signalen gebildete Korrelationsfunktion im Bereich einer Periode einen Amplitudensprung aufweist, der größer und/oder steiler als alle weiteren, während dieser einen Periode auftretenden Amplitudensprünge ist. Dieser eine Amplitudensprung betrifft dann genau denjenigen Bereich der Korrelationsfunktion, welcher zur Auswertung und Bestimmung der Tastweite herangezogen wird. Aufgrund seiner Steilheit läßt sich der jeweilige Tastabstand sehr genau ermitteln.

Besonders einfach läßt sich der erfindungsgemäße Lichttaster realisieren, wenn die beiden Signale jeweils nur zwei voneinander verschiedene Amplitudenstufen aufweisen, d.h. wenn beide Signale aus in unterschiedlichen Zeitabständen aufeinanderfolgenden Rechteckimpulsen bestehen.

Dabei werden beide Signale bevorzugt aus aufeinanderfolgenden Einzelsignalen jeweils gleicher Länge aufgebaut, wobei die Einzelsignale jeweils entweder die erste oder die zweite Amplitudenstufe aufweisen. Die Länge der Einzelsignale entspricht dabei beispielsweise der Periodenlänge eines im Lichttaster enthaltenen Taktgenerators.

Von Vorteil ist es, wenn die beiden Amplitudenstufen der beiden Signale symmetrisch zu Null angeordnet sind. In diesem Fall handelt es sich bei beiden Signalen um bipolare Signale, was auf vorteilhafte Weise dazu führt, daß die Symmetrielinie der Korrelationsfunktion bzw. die Ausgangsspannung eines die Korrelationsfunktion erzeugenden Korrelators den Wert Null annehmen kann. Somit wird die Symmetrielinie in vorteilhafter Weise unabhängig vom jeweils gegebenen Empfangspegel.

Vorteilhaft ist es weiterhin, wenn der erwähnte Amplitudensprung der Korrelationsfunktion so steil ist, daß seine zeitliche Erstreckung ungefähr im Bereich der Länge eines die beiden zu korrelierenden Signale bildenden Einzelsignals oder darunter liegt. Bei einer derartigen Steilheit läßt sich eine besonders gute Genauigkeit hinsichtlich des zu ermittelnden Tastabstands erreichen.

Die jeweils zu verwendenden Signalformen der beiden zu korrelierenden Signale werden bevorzugt durch rechnergestützte Suche ermittelt, wobei die beispielsweise mittels eines Zufallsgenerators generierten Signale anschließend korreliert und die auf diese Weise gebildete Korrelationsfunktion analysiert wird. Die zufällig ermittelten Signale werden dann als brauchbar zugelassen, wenn die Korrelationsfunktion bestimmte Kriterien erfüllt, insbesondere wenn sie einen Amplitudensprung der vorstehend beschriebenen Art aufweist.

Erfindungs gemäß liegen die Werte der Korrelationsfunktion vor dem Amplitudensprung oberhalb einer oberen Schwelle und nach dem Amplitudensprung unterhalb einer unteren Schwelle. Ebenso können die Werte der Korrelationsfunktion vor dem Amplitudensprung jedoch auch unterhalb einer unteren Schwelle und nach dem Amplitudensprung oberhalb einer oberen Schwelle liegen. Die vorstehend bereits erwähnte Symmetrielinie der Korrelationsfunktion liegt bevorzugt ungefähr in der Mitte zwischen der oberen und der unteren Schwelle.

Um die erfindungsgemäß gewünschte Nichtlinearität der Korrelationsfunktion zu erreichen, dürfen die beiden zu korrelierenden Signale nicht untereinander gleiche Signalformen aufweisen. Insbesondere ist es sinnvoll, wenn die beiden Signale so unterschiedlich zueinander sind, daß sie innerhalb einer Periode zumindest in einem Bereich von 50% dieser Periode voneinander unterschiedliche Werte aufweisen.

Eine besonders vorteilhafte Ausführungsform der Erfindung kann dadurch realisiert werden, daß die Lage des Amplitudensprungs der Korrelationsfunktion wahlweise innerhalb einer Periode verschiebbar ist, um so den Lichttaster an jeweils gewünschte, unterschiedliche Tastweiten anpassen zu können. Eine solche Verschiebung des Amplitudensprungs bzw. eine entsprechende Veränderung der Korrelationsfunktion läßt sich entweder durch Modifikation der verwendeten Signalformen oder durch das Einstellen von Verzögerungszeiten erreichen, die eine zeitliche Verschiebung zwischen den beiden zu korrelierenden Signalen bewirken.

Bevorzugt ist es, wenn zu diesem Zweck zwischen dem das erste Signal erzeugenden Signalgenerator und dem Lichtsender ein einstellbares Verzögerungsglied zur Erzeugung eines den Lichtsender beaufschlagenden, verzögerten Signals geschaltet ist. Ebenso oder zusätzlich ist es jedoch auch möglich, zwischen dem das zweite Signal erzeugenden Signalgenerator und der Korrelationsstufe ein einstellbares Verzögerungsglied zur Erzeugung eines verzögerten zweiten Signals zu schalten.

Das Einstellen der Verzögerungszeiten bzw. das Verschieben des Amplitudensprungs innerhalb der Korrelationsfunktion kann beispielsweise über eine am Lichttaster vorgesehene Teach-Taste oder einen an den Lichttaster angeschlossenen PC erfolgen. So läßt sich der erfindungsgemäße Lichttaster auf einfachste Weise an unterschiedliche, jeweils gewünschte Tastweiten anpassen.

Weitere bevorzugte Ausführungsformen der Erfindung sind in den Unteransprüchen angegeben.

Die Erfindung wird nachfolgend anhand der Zeichnungen unter Bezugnahme auf ein mögliches Ausführungsbeispiel beschrieben; in den Zeichnungen zeigen:
- Fig. 1: den Verlauf von Korrelationsfunktionen bei Lichttastern gemäß internem Stand der Technik der Anmelderin,
- Fig. 2: den Verlauf einer Korrelationsfunktion eines erfindungsgemäßen Lichttasters,
- Fig. 3: ein Blockschaltbild des Aufbaus eines erfindungsgemäßen Lichttasters,
- Fig. 4: den zeitlichen Verlauf des ersten, den Lichtsender beaufschlagenden Signals Tₓ sowie des zweiten, zur Bildung der Korrelationsfunktion herangezogenen Signals L₀ bei einem erfindungsgemäßen Lichttaster und
- Fig. 5: ein weiteres Beispiel für den Verlauf der Korrelationsfunktion bei einem erfindungsgemäßen Lichttaster.

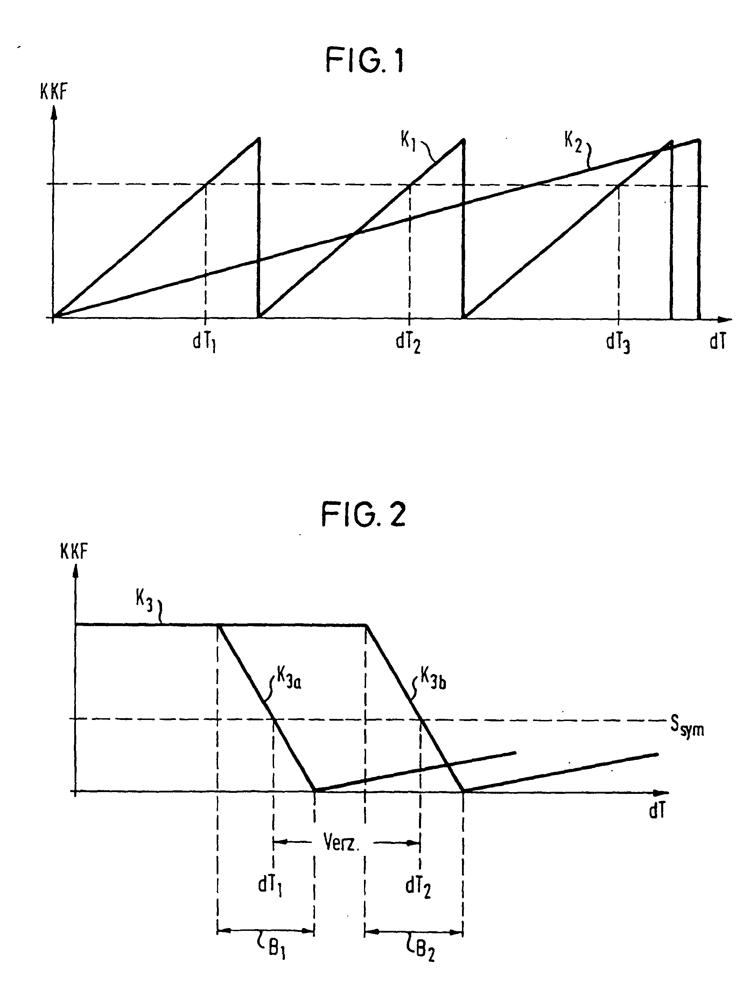

Fig. 1 zeigt zwei Kreuzkorrelationsfunktionen K₁ und K₂ eines Lichttasters gemäß internem Stand der Technik der Anmelderin, bei dem die Kreuzkorrelationsfunktion zwischen dem ausgesendeten und dem empfangenen Signal gebildet wird, wobei beide Signale gleiche Signalform aufweisen.

Die Kreuzkorrelationsfunktion K₁ weist eine vergleichsweise steile Kennlinie bei kurzer Periodendauer auf, wohingegen die Kreuzkorrelationsfunktion K₂ eine flache Steigung bei langer Periodendauer besitzt.

Die kurze Periodendauer der Kreuzkorrelationsfunktion K₁ bedingt auf nachteilige Weise Probleme hinsichtlich des Eindeutigkeitsbereichs, da es nicht ohne weiteres möglich ist, zu bestimmen, in welchem Bereich der drei steigenden Kennlinienabschnitte der tatsächlich gemessene Wert anzusiedeln ist. Bei einem gemessenen Wert a der Kreuzkorrelationsfunktion K₁ können folglich drei verschiedene Verschiebungen dT₁, dT₂ oder dT₃ der beiden korrelierten Signale vorliegen.

Am Verlauf der Kreuzkorrelationsfunktion K₂ ist die relativ geringe Steigung dieser Funktion von Nachteil, die zu einer geringen Genauigkeit der ermittelten Verschiebung der beiden korrelierten Funktionen bzw. des ermittelten Tastabstandes führt.

Fig. 2 zeigt zwei wahlweise einstellbare Verläufe einer erfindungsgemäßen, nichtlinearen Kreuzkorrelationsfunktion K₃. Typisch an diesen Verläufen ist ein über einen anfänglichen Bereich im wesentlichen konstanter Verlauf der Kreuzkorrelationsfunktion, woraufhin ein relativ steiler Abfall der Kreuzkorrelationsfunktion erfolgt. Nach diesem Abfall der Kreuzkorrelationsfunktion verläuft sie entweder auf einem im wesentlichen konstanten niedrigen Wert oder steigt langsam an, wie dies in Fig. 2 dargestellt ist.

Der für den zu ermittelnden Tastabstand maßgebliche Wert dT wird bestimmt, indem untersucht wird, bei welchem Wert dT die Kreuzkorrelationsfunktion K₃ die Symmetrielinie S_{sym} schneidet.

Beim Verlauf gemäß K₃ₐ erfolgt der maßgebliche Abfall der Kreuzkorrelationsfunktion im Bereich B₁. Die maßgebliche Tastweite entspricht dem Wert dT₁, was bedeutet, daß mit einem Lichttaster mit der Korrelations-Kennlinie K₃ₐ festgestellt werden kann, ob sich ein Tastgut vor oder hinter einem Abstand befindet, welcher dT₁ entspricht, wobei die genaue Position des Tastgutes in einem Bereich exakt bestimmt werden kann, welcher dem Bereich B₁ entspricht.

Falls man nun bei einem erfindungsgemäßen Lichttaster einen anderen maßgeblichen Tastabstand einstellen möchte, wird die Kennlinie der Kreuzkorrelationsfunktion durch eine der vorstehend bereits beschriebenen Maßnahmen derart verschoben, daß sich beispielsweise ein Verlauf gemäß der Kennlinie K_{3b} ergibt. Hier kann dann die genaue Position des Tastgutes innerhalb eines Bereiches B₂ bestimmt werden.

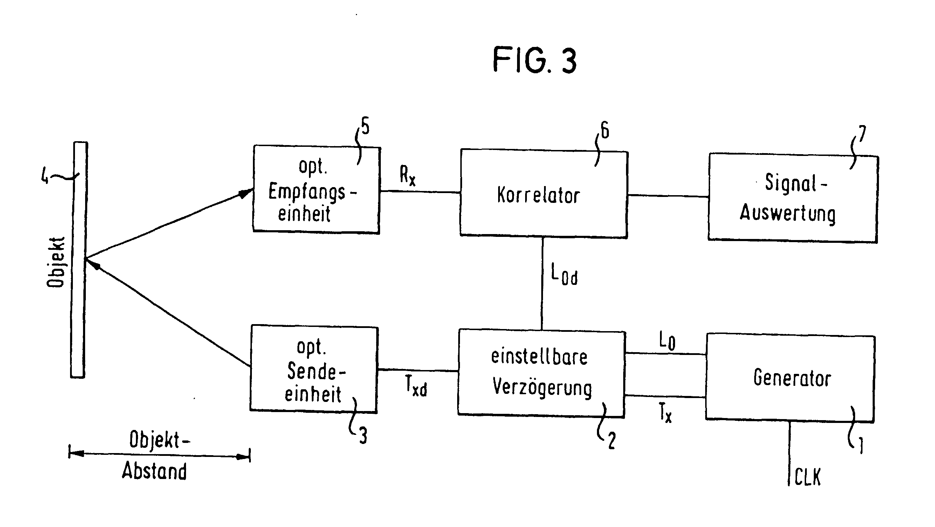

Fig. 3 zeigt ein Blockschaltbild eines erfindungsgemäßen Lichttasters.

Ein Signalgenerator 1 wird von einem Takt CLK beaufschlagt und generiert zwei voneinander verschiedene Signale Tₓ und L₀. Beide Signale werden einem Verzögerungsglied 2 zugeführt, mittels welchem entweder das Signal Tₓ oder das Signal L₀ oder beide Signale Tₓ, L₀ verzögert werden können.

Das verzögerte Signal T_{xd} gelangt dann vom Verzögerungsglied 2 zu einer optischen Sendeeinheit 3, welche ein Lichtsignal in Richtung eines Objektes 4 sendet. Der Amplitudenverlauf des Lichtsignals entspricht dabei dem Signalverlauf des Signals T_{xd}.

Das Objekt 4 reflektiert das von der optischen Sendeeinheit 3 ausgesandte Licht und leitet dieses zu einer optischen Empfangseinheit 5, welche das empfangene Licht in ein elektrisches Signal Rₓ umwandelt, dessen Signalform dem Amplitudenverlauf des empfangenen Lichts entspricht.

Das Signal Rₓ wird einem Korrelator 6 zugeführt, welcher zudem durch das verzögerte Signal L_{0d} beaufschlagt wird.

Im Korrelator 6 wird die Kreuzkorrelationsfunktion zwischen den beiden Signalen Rₓ und L_{0d} gebildet und einer Signalauswerteeinheit 7 zugeführt.

Durch eine mittels der Verzögerungseinheit 2 einstellbare Verzögerung des Signals Tₓ und/oder L₀ kann der Lichttaster gemäß Fig. 3 an verschiedene Objektabstände zwischen Lichttaster und Objekt 4 angepaßt werden.

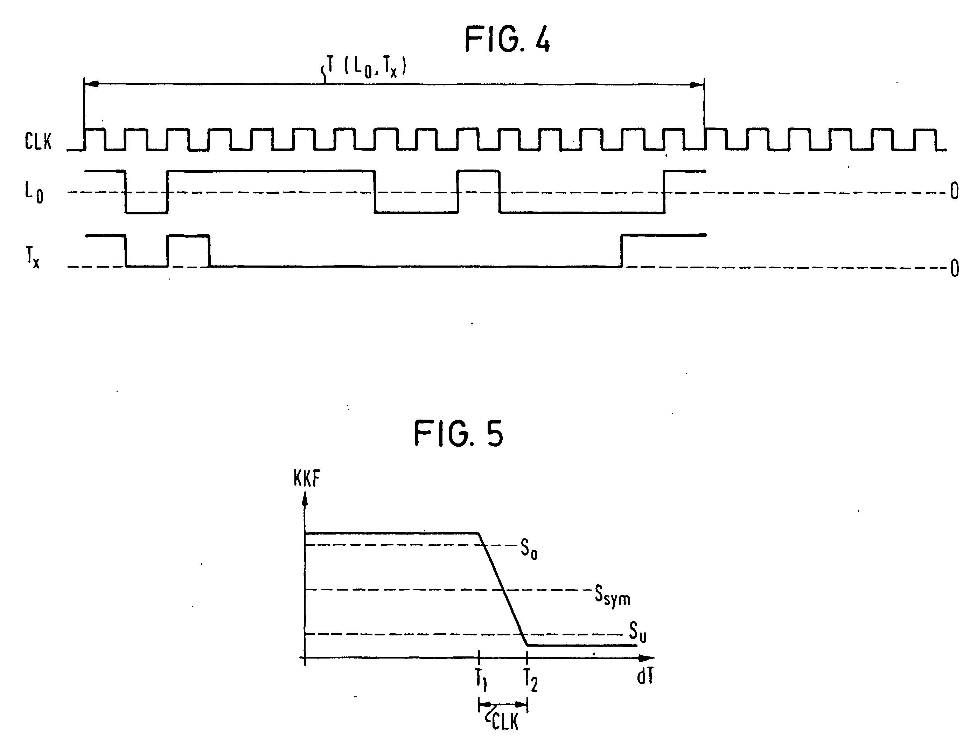

Fig. 4 zeigt den Verlauf des den Generator 1 gemäß Fig. 3 beaufschlagenden Taktsignals CLK, welches eine periodisch wiederkehrende Folge von Rechteckimpulsen bildet.

Unter dem Taktsignal CLK ist das vom Generator 1 gemäß Fig.3 generierte Signal L₀ gezeigt, welches zwei symmetrisch um Null liegende Amplitudenstufen aufweist. Die Periodenlänge T(L₀) des Signals L₀ entspricht 15 Taktzyklen des Signals CLK.

Unterhalb des Signals L₀ ist das ebenfalls vom Generator 1 gemäß Fig. 3 erzeugte Signal Tₓ gezeigt, welches zwei verschiedene Amplitudenwerte, nämlich 0 und 1 aufweist. Die Periodenlänge T(Tₓ) des Signals Tₓ beträgt ebenfalls 15 Taktzyklen des Signals CLK.

In der Praxis ist es durchaus denkbar, auch Signale L₀, Tₓ zum Einsatz zu bringen, deren Periodenlängen mehr als 15, insbesondere bis zu mehreren hundert Taktzyklen des Signals CLK entsprechen.

Dargestellt in normierten Amplitudenwerten läßt sich der Amplitudenverlauf der beiden Signale L₀ und Tₓ innerhalb einer Periode wie folgt veranschaulichen:

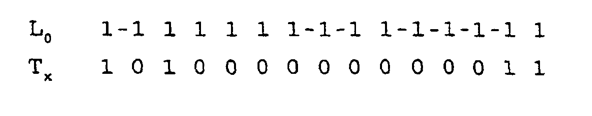

Die Kreuzkorrelationsfunktion der beiden vorstehenden Signale läßt sich normiert wie folgt veranschaulichen:

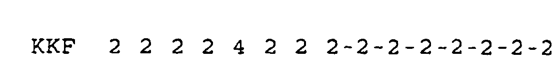

Der maßgebliche Amplitudensprung der vorstehenden Kreuzkorrelationsfunktion erfolgt bei dem Sprung vom Wert 2 auf den Wert -2. Da die Kreuzkorrelationsfunktion eine Periode von 15 Taktzyklen aufweist, entspricht auch der Eindeutigkeitsbereich des Lichttasters 15 Taktzyklen.

Ideal ist im vorliegenden Fall, wenn der Verlauf der beiden Signale Tₓ und L₀ so gewählt wird, daß der maßgebliche Sprung in der Kreuzkorrelationsfunktion vom Wert 4 auf den Wert -4 erfolgt. Die normierte Höhe des Amplitudensprungs beträgt dann 8. In der Praxix genügt es jedoch, wenn der Amplitudensprung die Hälfte des maximal möglichen Wertes, also wie im vorliegenden Fall 4 beträgt.

Fig. 5 zeigt den schematischen Verlauf einer in der Praxis erhältlichen Kreuzkorrelationsfunktion bei Verarbeitung der Signale gemäß Fig. 4. Im für die Bildung des Kreuzkorrelationsfunktion verantwortlichen Korrelator werden die beiden zu korrelierenden Signale miteinander multipliziert, woraufhin im Rahmen der nachfolgenden Signalauswertung noch eine Tiefpaßfilterung erfolgt.

Der Verlauf gemäß Fig. 5 zeigt, daß der maßgebliche Amplitudensprung innerhalb eines Taktzyklus T₂-T₁ erfolgt, wobei die Amplitude der Kreuzkorrelationsfunktion vor diesem Amplitudensprung oberhalb einer Schwelle S₀ und nach dem Amplitudensprung unterhalb einer Schwelle S_{U} liegt.

Wird also festgestellt, daß bei einem konkret empfangenen Signal der ermittelte Wert der Kreuzkorrelationsfunktion oberhalb der Schwelle Sₒ liegt, so befindet sich das Objekt im Vordergrund, also vor dem eingestellten Tastabstand. Liegt der Wert der Kreuzkorrelationsfunktion jedoch unterhalb der Schwelle S_{U}, so befindet sich das Objekt im Hintergrund, also hinter dem eingestellten Tastabstand.

Falls der bestimmte Wert der Kreuzkorrelationsfunktion dem in Fig. 5 eingezeichneten Wert S_{sym}, welcher vorzugsweise gleich Null ist, entspricht, befindet sich das Objekt entweder exakt an der eingestellten Tastweite oder es ist überhaupt kein Objekt vorhanden. Diese Doppeldeutigkeit muß durch eine zusätzliche Überprüfung ausgeschlossen werden, wobei zu diesem Zweck beispielsweise die parallele Bestimmung der Empfangsenergie geeignet ist. Falls die Empfangsenergie unter einer vorgegebenen Schwelle liegt, ist kein Objekt vorhanden, falls sie oberhalb einer Schwelle liegt, befindet sich das Objekt exakt an der eingestellten Tastweite.

Falls ein Wert der Kreuzkorrelationsfunktion zwischen S_{U} und Sₒ bestimmt wird, so kann aufgrund des steilen Verlaufs der Kreuzkorrelationsfunktion in dem entsprechenden Bereich sehr exakt auf den Abstand zwischen Objekt und Lichttaster geschlossen werden.

## Patentansprüche

1. Lichttaster mit einem Lichtsender (3) zur Aussendung eines Lichtsignals in einen zu überwachenden Bereich und einem Lichtempfänger (5) zum Empfangen eines von einem im Überwachungsbereich vorhandenen Objekt (4) reflektierten Lichtsignals mit zumindest einem Signalgenerator (1) zur Erzeugung eines ersten Signals (Tₓ) zur Beaufschlagung des Lichtsenders (3) sowie zur Erzeugung eines zweiten, in einer definierten Phasenbeziehung zum ersten Signal (Tₓ) stehenden zweiten Signals (L₀) mit im Vergleich zum ersten Signal (Tₓ) unterschiedlicher Signalform, sowie mit einer Korrelationsstufe (6) zur Erzeugung der Korrelationsfunktion (KKF) zwischen dem empfangenen Lichtsignal (Rₓ) und dem zweiten Signal (L₀) und einer der Korrelationsstufe (6) nachgeschalteten Auswertestufe (7) zur Ermittlung einer auf den Abstand zwischen Lichttaster und Objekt (4) bezogenen Information, **dadurch gekennzeichnet, daß** das erste Signal (Tx) und das zweite Signal (L₀) eine solche Signalform besitzen, daß die Korrelationsfunktion (KKF) im Bereich einer Periode einen Amplitudensprung aufweist, der größer und/oder steiler als alle weiteren, während einer Periode auftretenden Amplitudensprünge ist, und wobei die Werte der Korrelationsfunktion (KKF) vor dem Amplitudensprung oberhalb bzw. unterhalb einer oberen bzw. unteren Schwelle (S_{O}, S_{U}) und nach dem Amplitudensprung unterhalb bzw. oberhalb einer unteren bzw. oberen Schwelle (S_{U}, S_{O}) liegen.

2. Lichttaster nach Anspruch 1, **dadurch gekennzeichnet, daß** das erste Signal (Tₓ) und das zweite Signal (L₀) die gleiche Periodenlänge T(L₀,Tₓ) aufweisen.

3. Lichttaster nach einem der vorhergehenden Ansprüche, **dadurch gekennzeichnet, daß** das erste Signal (Tx) und das zweite Signal (L₀) jeweils nur zwei voneinander verschiedene Amplitudenstufen aufweisen, wobei das erste Signal (Tx) und das zweite Signal (L₀) aus aufeinanderfolgenden Einzelsignalen jeweils gleicher Länge (T_{CLK}) aufgebaut sind, und die Einzelsignale jeweils nur die erste oder die zweite Amplitudenstufe aufweisen.

4. Lichttaster nach Anspruch 3, **dadurch gekennzeichnet, daß** beide Amplitudenstufen des zweiten Signals (L₀) symmetrisch zu Null angeordnet sind, und/oder daß der Amplitudensprung so steil ist, daß seine zeitliche Erstreckung der Länge (T_{CLK}) eines Einzelsignals entspricht.

5. Lichttaster nach einem der vorhergehenden Ansprüche, **dadurch gekennzeichnet, daß** die Signalformen des ersten Signals (Tx) und des zweiten Signals (L₀) durch rechnergestützte Suche und anschließende Analyse der jeweiligen Korrelationsfunktion KKF ermittelbar sind, und/oder daß die Werte der Korrelationsfunktion (KKF) um den Amplitudenwert Null liegen und/oder daß die Korrelationsfunktion (KKF) keinen Gleichanteil aufweist.

6. Lichttaster nach einem der vorhergehenden Ansprüche, **dadurch gekennzeichnet, daß** die zeitliche Position des Amplitudensprungs durch einen vom Benutzer des Lichttasters vornehmbaren Einstellvorgang innerhalb einer Periode der Korrelationsfunktion (KKF) verschiebbar ist, wodurch der Lichttaster an unterschiedliche Tastweiten anpaßbar ist.

7. Lichttaster nach einem der vorhergehenden Ansprüche, **dadurch gekennzeichnet, daß** das erste und das zweite, ohne Phasenverschiebung angeordnete, Signal (Tₓ, L₀) innerhalb einer Periode zumindest in einem Bereich von 50% der Periode voneinander unterschiedliche Werte aufweisen, und/oder daß zwischen dem das erste Signal (Tₓ) erzeugenden Signalgenerator (1) und den Lichtsender (3) ein einstellbares Verzögerungsglied (2) zur Erzeugung eines den Lichtsender (3) beaufschlagenden, verzögerten Signals (T_{xd}) geschaltet ist.

8. Lichttaster nach einem der vorhergehenden Ansprüche, **dadurch gekennzeichnet, daß** zwischen dem das zweite Signal (L₀) erzeugenden Signalgenerator (1) und der Korrelationsstufe (6) ein einstellbares Verzögerungsglied (2) zur Erzeugung eines verzögerten Signals (L_{0d}) geschaltet ist.

## Claims

1. Light sensor comprising a light transmitter (3) for transmitting a light signal into a region to be monitored and a light receiver (5) for receiving a light signal reflected from an object (4) present in the monitored region, at least one signal generator (1) for producing a first signal (Tₓ) to energize the light transmitter (3) and also for producing a second signal (L₀) standing in a defined phase relationship to the first signal (Tₓ), but with a different signal shape in comparison to the first signal (Tₓ), and also a correlation stage (6) for producing the correlation function (KKF) between the received light signal (Rₓ) and the second signal (L₀) as well as an evaluation stage (7) connected downstream of the correlation stage (6) for determining information related to the distance between the light sensor and the object (4),
**characterized in that** the first signal (Tₓ) and the second signal (L₀) have a signal shape such that the correlation function (KKF) has an amplitude step in the range of one period, which is larger and/or steeper than all further amplitude steps which occur during one period,
and wherein the values of the correlation function (KKF) before the amplitude step lie above or below an upper or lower threshold (So, S_{U}) respectively, and lie below or above a lower or upper respective threshold (S_{U}, S₀) after the amplitude step

2. Light sensor in accordance with claim 1, **characterized in that** the first signal (Tₓ) and the second signal (L₀) have the same period length T(L₀, Tₓ).

3. Light sensor in accordance with any one of the preceding claims, **characterized in that** the first signal (Tₓ) and the second signal (L₀) each have only two amplitude steps different from one another, wherein the first signal (Tₓ) and the second signal (L₀) are built up of sequential individual signals, each of the same length (T_{CLK}), with the individual signals each only having the first or the second amplitude step.

4. Light sensor in accordance with claim 3, **characterized in that** both amplitude steps of the second signal (L₀) are arranged symmetrically with respect to zero; and/or **in that** the amplitude step is so steep that its extent timewise corresponds to the length (T_{CLK}) of an individual signal.

5. Light sensor in accordance with any one of the preceding claims **characterized in that** the signal shapes of the first signal (Tₓ) and of the second signal (L₀) can be found by computer-aided search and subsequent analysis of the respective correlation function (KKF); and/or **in that** the values of the correlation function (KKF) lie about the amplitude value zero and/or **in that** the correlation function (KKF) has no DC component.

6. Light sensor in accordance with any one of the preceding claims, **characterized in that** the time position of the amplitude step can be shifted by an adjustment process which can be effected by the user of the light sensor within one period of the correlation function (KKF), whereby the light sensor can be matched to different sensing distances.

7. Light sensor in accordance with any one of the preceding claims, **characterized in that** the first and the second signals (Tₓ, L₀) arranged without phase shift have values which differ from one another within one period, at least in a range of 50 % of the period; and/or **in that** an adjustable delay element (2) is inserted between the signal generator (1) generating the first signal (Tₓ) and the light transmitter (3) to produce a delayed signal (T_{xd}) which energizes the light transmitter (3).

8. Light sensor in accordance with any one of the preceding claims, **characterized in that** an adjustable delay element (2) is inserted between the signal generator (1) generating the second signal (L₀) and the correlation stage (6) to produce a delayed signal (L_{0d}).

## Revendications

1. Senseur lumineux comportant un émetteur de lumière (3) pour émettre un signal lumineux dans une zone à surveiller, et un récepteur de lumière (5) pour recevoir un signal lumineux réfléchi par un objet (4) présent dans la zone à surveiller, comportant au moins un générateur de signal (1) pour générer un premier signal (Tₓ) pour solliciter l'émetteur de lumière (3) ainsi que pour générer un second signal (L₀) présentant un rapport de phase défini avec le premier signal (Tₓ) et une forme de signal différente par comparaison au premier signal (Tₓ), et comportant un étage de corrélation (6) pour générer la fonction de corrélation (KKF) entre le signal lumineux reçu (Rₓ) et le second signal (L₀) et un étage d'évaluation (7) agencé en aval de l'étage de corrélation (6) et destiné à déterminer une information relative à la distance entre le senseur lumineux et l'objet (4),
**caractérisé en ce que** le premier signal (Tₓ) et le second signal (L₀) possèdent une forme de signal telle que la fonction de corrélation (KKF) présente dans la plage d'une période un saut d'amplitude qui est plus grand et/ou plus raide que tous les autres sauts d'amplitude qui apparaissent pendant une période, et **en ce que** les valeurs de la fonction de corrélation (KKF) se trouvent, avant le saut d'amplitude, au-dessus ou au-dessous d'un seul supérieur ou inférieur (Sₒ, Sᵤ) et, après le saut d'amplitude, au-dessous ou au-dessus d'un seul inférieur ou supérieur (Sᵤ, Sₒ).

2. Senseur lumineux selon la revendication 1, **caractérise en ce que** le premier signal (Tₓ) et le second signal (L₀) présentent la même longueur de période T (L₀, Tₓ).

3. Senseur lumineux selon l'une des revendications précédentes, **caractérise en ce que** le premier signal (Tₓ) et le second signal (L₀) présentent chacun uniquement deux étages d'amplitude différents l'un de l'autre, le premier signal (Tₓ) et le second signal (L₀) étant constitués par des signaux individuels successifs de même longueur respective (T_{CLK}), et les signaux individuels présentant chacun uniquement le premier ou le second étage d'amplitude.

4. Senseur lumineux selon la revendication 3, **caractérise en ce que** les deux étages d'amplitude du second signal (L₀) sont agencés symétriquement par rapport à zéro, et/ou **en ce que** le saut d'amplitude est aussi raide que son extension dans le temps correspond à la longueur (T_{CLK}) d'un signal individuel.

5. Senseur lumineux selon l'une des revendications précédentes, **caractérise en ce que** les formes du premier signal (Tₓ) et du second signal (L₀) sont susceptibles d'être déterminées par recherche assistée par ordinateur et par analyse successive de la fonction de corrélation respective (KKF), et/ou **en ce que** les valeurs de la fonction de corrélation (KKF) se situent autour de la valeur d'amplitude zéro, et/ou **en ce que** la fonction de corrélation (KKF) ne présente pas de part égale.

6. Senseur lumineux selon l'une des revendications précédentes, **caractérise en ce que** la position temporelle du saut d'amplitude est déplaçable à l'intérieur d'une période de la fonction de corrélation (KKF) par une opération de réglage exécutée par l'utilisateur du senseur lumineux, grâce à quoi le senseur lumineux est adaptable à différentes portées de palpage.

7. Senseur lumineux selon l'une des revendications précédentes, **caractérise en ce que** le premier et le second signal (Tₓ, L₀) agencés sans déphasage à l'intérieur d'une seule période présentent des valeurs différentes au moins dans une plage de 50 % de la période, et/ou **en ce qu'**il est prévu entre le générateur de signal (1) générant le premier signal (Tₓ) et l'émetteur de lumière (3) un organe de temporisation réglable (2) pour générer un signal retardé (T_{xd}) sollicitant l'émetteur de lumière (3).

8. Senseur lumineux selon l'une des revendications précédentes, **caractérise en ce qu'**il est prévu entre le générateur de signal (1) générant le second signal (L₀) et l'étage de corrélation (6) un organe de temporisation réglable (2) pour générer un signal retardé (L_{0d}).
